# EUROPEAN PATENT APPLICATION

(11) **EP 3 236 432 A1**
(43) Date of publication of application: **25.10.2017**
(21) Application number: 14908382.6
(22) Date of filing: 15.12.2014
(51) Int. Cl.: G07D 7/16, B65H 7/06, G01B 21/08

(54) **THICKNESS DETECTION DEVICE**

(71) Applicant: Fujitsu Frontech Limited, Inagi-shi, Tokyo 206-8555 (JP)
(72) Inventor: YOSHIMURA, Kazuhisa, Inagi-shi Tokyo 206-8555 (JP)
(74) Representative: Haseltine Lake LLP
(86) International application number: PCT/JP2014/083181
(87) International publication number: WO 2016/098172

(57) **Abstract**

A thickness detection device (30) that includes a roller (33), rollers (35-1 to 35-10) being a plurality of rollers of a first group, rollers (45-1 to 45-9) being a plurality of rollers of a second group, sensors (67-1 to 67-10) being a plurality of sensors of a first group, and sensors (69-1 to 69-9) being a plurality of sensors of a second group. The roller (33) is a cylindrical fixed roller being rotatable around a shaft (31). The rollers (35-1 to 35-10) are provided with an interval therebetween in an axial direction of the roller (33), with the respective rollers (35) being arranged near the roller (33) on an upstream side in a carrying direction of paper sheets. The movable rollers (45-1 to 45-9) are provided with an interval therebetween so as to be in a staggered manner with respect to the rollers (35-1 to 35-10) in the axial direction of the roller (33), with the respective rollers (45) being arranged near the roller (33) on a downstream side in the carrying direction.

## Description

### Technical Field

The present invention relates to a thickness detection device.

### Background Art

A paper-sheet handling device includes an automated teller machine (ATM), a banknote deposit/withdrawal device installed at a bank counter, a self check-out register installed at a supermarket for a customer himself/herself to check out, and the like.

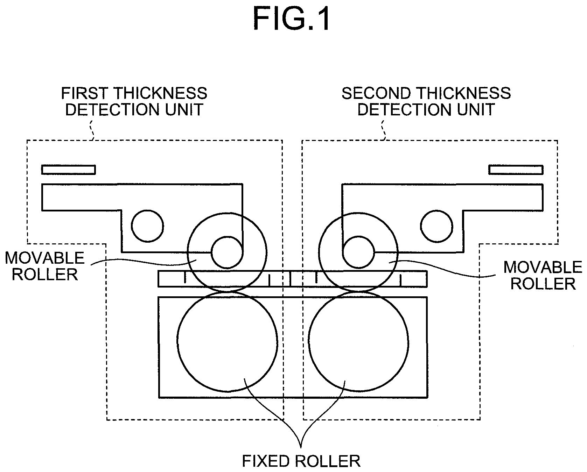

The paper-sheet handling device may be mounted with a "thickness detection device" in order to discriminate paper sheets repaired with a tape or the like and paper sheets having a folded or lost part. Conventionally, in order to improve the thickness detection accuracy, a "thickness detection device" having a plurality of thickness detection units, that is, a first thickness detection unit, and a second thickness detection unit which is provided before or after the first thickness detection unit in a carrying direction of paper sheets has been proposed. FIG. 1 is a diagram schematically illustrating a configuration of a conventional thickness detection device. In the conventional "thickness detection device", each of the first thickness detection unit and the second thickness detection unit include a plurality of roller pairs in which each roller pair is formed of two rollers arranged vertically across a paper-sheet carrier path, and the respective roller pairs are arranged with a predetermined interval therebetween in a direction orthogonal to the carrying direction, and thickness detection sensors corresponding to the roller pairs, respectively. The roller pairs of the first thickness detection unit are arranged in a "staggered manner" with respect to the roller pairs in the second thickness detection unit. Accordingly, even if a tape used for the repair passes between the two roller pairs in the first thickness detection unit, the thickness can be detected by the roller pairs of the second thickness detection unit, thereby enabling to improve the thickness detection accuracy.

### Citation List

### Patent Citation

Patent Literature 1: Japanese Patent Application Laid-open No. 2004-083172

### Summary of Invention

### Technical Problem

However, in the conventional thickness detection device described above, the first thickness detection unit and the second thickness detection unit respectively have an independent configuration, and thus the space required for arrangement, is increased.

The technique disclosed herein has been achieved in view of the above problems, and an object of the present invention is to provide a thickness detection device that realizes space saving.

### Solution to Problem

To solve the above problem and attain the object, a thickness detection device disclosed in this application, according to an aspect, includes: a cylindrical fixed roller being rotatable around a shaft; a plurality of movable rollers of a first group, which are provided with an interval therebetween in an axial direction of the fixed roller, with the respective movable rollers being arranged near the fixed roller on an upstream side in a carrying direction of paper sheets; a plurality of movable rollers of a second group, which are provided with an interval therebetween so as to be in a staggered manner with respect to the movable rollers of the first group in the axial direction of the fixed roller, with the respective movable rollers being arranged near the fixed roller on a downstream side in the carrying direction; a plurality of sensors of a first group that respectively correspond to each of the movable rollers of the first group to detect displacements of the movable rollers of the first group in a direction orthogonal to the shaft respectively; and a plurality of sensors of a second group that respectively correspond to each of the movable rollers of the second group to detect displacements of the movable rollers of the second group in a direction orthogonal to the shaft respectively.

### Advantageous Effects of Invention

According to the disclosed mode, space saving can be achieved.

### Brief Description of Drawings

FIG. 1 is a diagram schematically illustrating a configuration of a conventional thickness detection device.
FIG. 2 is a diagram illustrating an example of a paper-sheet handling device including a thickness detection device according to a first embodiment.
FIG. 3 is a diagram illustrating an example of the thickness detection device according to the first embodiment.
FIG. 4 is a diagram illustrating an example of the thickness detection device according to the first embodiment.
FIG. 5 is a diagram illustrating an example of the thickness detection device according to the first embodiment.
FIG. 6 is a diagram illustrating an example of the thickness detection device according to the first embodiment.
FIG. 7 is a diagram illustrating an example of the thickness detection device according to the first embodiment.
FIG. 8 is a diagram illustrating an example of the thickness detection device according to the first embodiment.
FIG. 9 is a diagram illustrating a leaf spring as viewed from a front upper left side thereof.
FIG. 10 is a diagram illustrating the leaf spring as viewed from an upper side thereof.
FIG. 11 is a diagram illustrating a sensor unit as viewed from an upper side thereof.
FIG. 12 is a diagram for explaining a processing operation of the thickness detection device according to the first embodiment.
FIG. 13 is a diagram for explaining a correction process of a sensor value according to a second embodiment.
FIG. 14 is a diagram for explaining the correction process of the sensor value according to the second embodiment.

### Embodiments for Carrying Out the Invention

Embodiments of a thickness detection device disclosed in the present application are described in detail below with reference to the accompanying drawings. These embodiments do not limit the thickness detection device disclosed in the present application. Constituent elements having like functions in the embodiments are denoted by like reference signs and redundant descriptions thereof will be omitted.

### [First embodiment]

### [Configuration example of paper-sheet handling device]

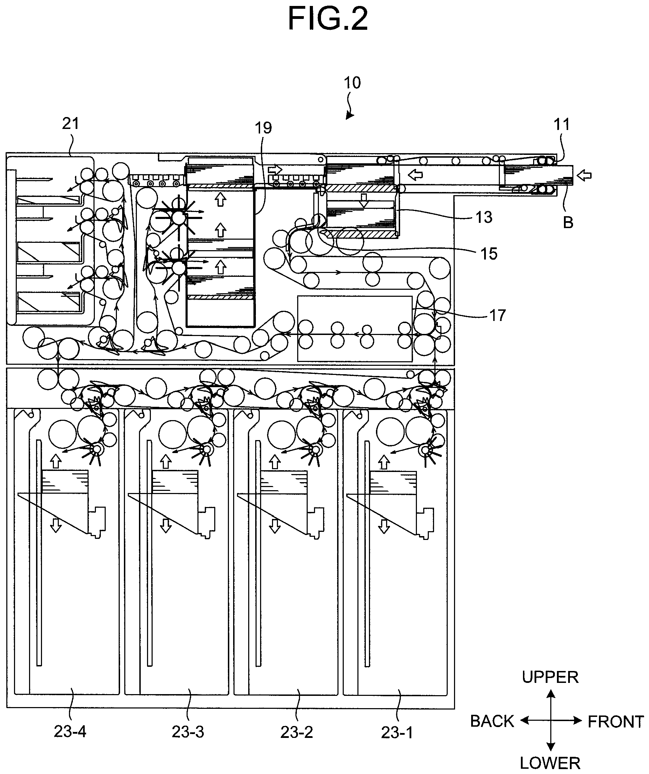

FIG. 2 is a diagram illustrating an example of a paper-sheet handling device including a thickness detection device according to a first embodiment. In FIG. 2, a paper-sheet handling device 10 includes, for example, an insert/discharge port 11, an insert-banknote temporary holding unit 13, a banknote feeding unit 15, a verifying unit 17, a discharge-banknote temporary storing unit 19, a non-reusable-banknote storing unit 21, and storing cassettes 23-1 to 23-4. A right side in FIG. 2 is assumed to be a "front side" of the paper-sheet handling device 10, a left side in FIG. 2 is assumed to be a "back side" of the paper-sheet handling device 10, an upper side in FIG. 2 is assumed to be an "upper side" of the paper-sheet handling device 10, a lower side in FIG. 2 is assumed to be a "lower side" of the paper-sheet handling device 10, the front side in FIG. 2 is assumed to be a "left side" of the paper-sheet handling device 10, and the back side of the sheet of FIG. 2 is assumed to be a "right side" of the paper-sheet handling device 10.

Banknotes B inserted from the insert/discharge port 11, are temporarily held by the insert-banknote temporary holding unit 13. The banknote feeding unit 15 feeds the banknotes which are temporarily held in the insert-banknote temporary holding unit 13, to a carrier path one by one. The banknote fed by the banknote feeding unit 15, is input to the verifying unit 17.

The verifying unit 17 includes a control unit (not illustrated) and a thickness detection device 30 described later. The control unit (not illustrated) uses, for example, a sensor value (a thickness value) which is detected by the thickness detection device 30 described later, to determine whether the banknote to be carried is a normal banknote and a reusable banknote, a normal banknote and a banknote not to be reused, or an abnormal banknote.

When the abnormal banknote is detected by the verifying unit 17, the banknote is carried through the carrier path, and is accumulated in the discharge-banknote temporary holding unit 19. The banknotes accumulated in the discharge-banknote temporary holding unit 19, are returned to a user of the paper-sheet handling device 10 from the insert/discharge port 11.

When the inserted banknote is determined as a normal banknote and a reusable banknote by the verifying unit 17, the banknote is carried through the carrier path, and is stored in one of the storing cassettes 23-1 to 23-4. For example, the storing cassettes 23-1 to 23-4 are used according to the kind of banknotes. When a discharge operation is performed by the user of the paper-sheet handling device 10, the banknotes stored in the storing cassettes 23-1 to 23-4 are carried to the discharge-banknote temporary holding unit 19 and are accumulated therein. The banknotes accumulated in the discharge-banknote temporary holding unit 19, are discharged from the insert/discharge port 11.

When the inserted banknote is determined by the verifying unit 17 as a normal banknote and a banknote not to be reused, the banknote is stored in the non-reusable-banknote storing unit 21.

### [Configuration example of thickness detection device]

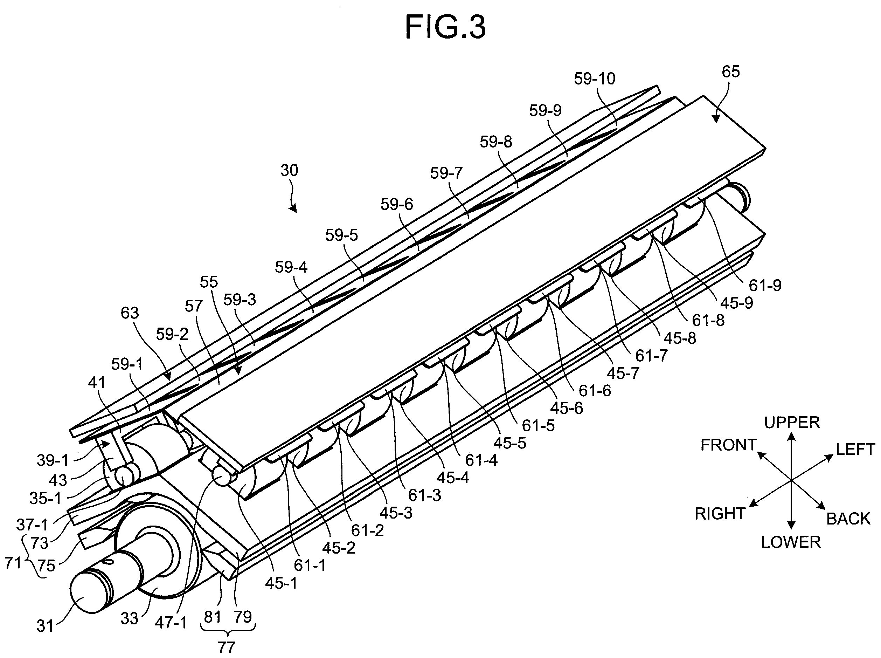

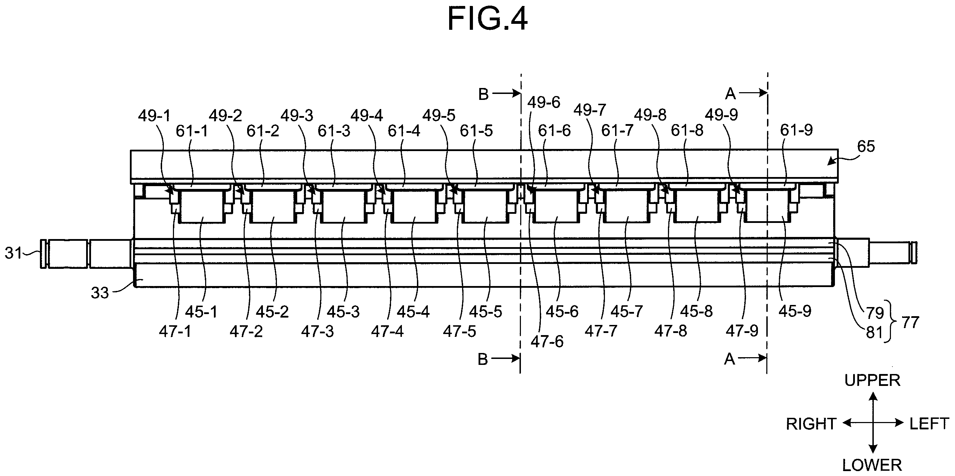

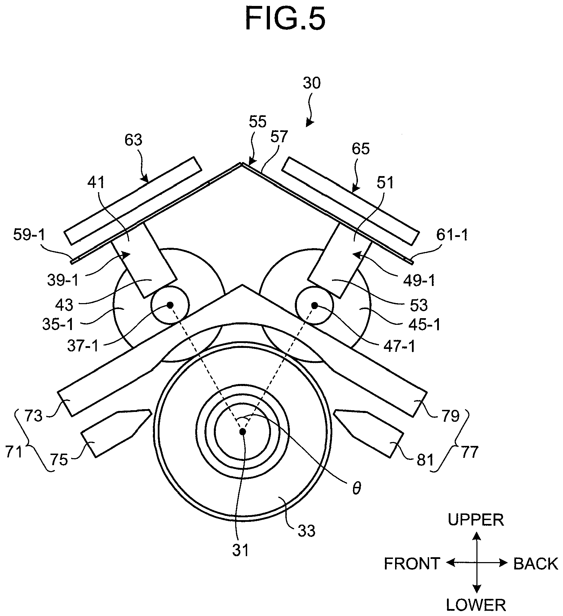

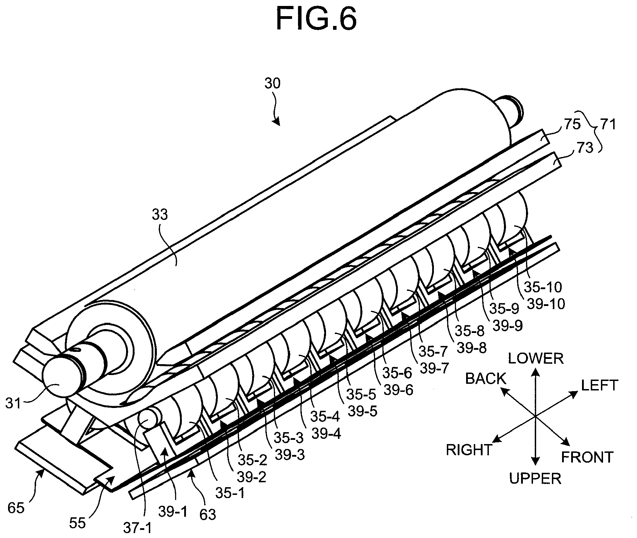

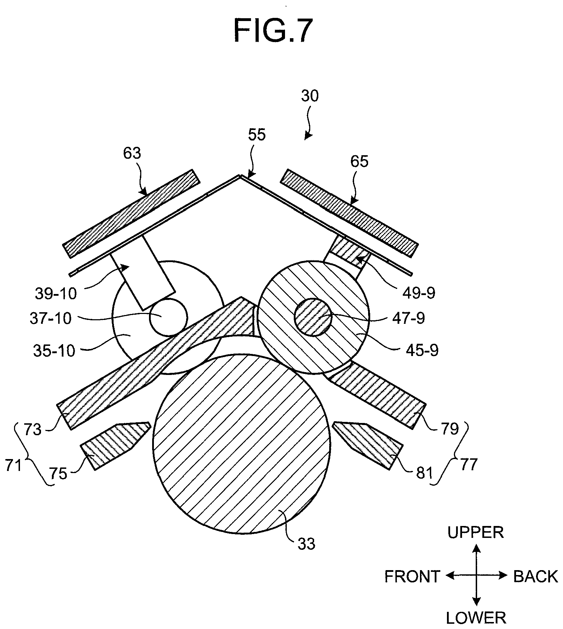

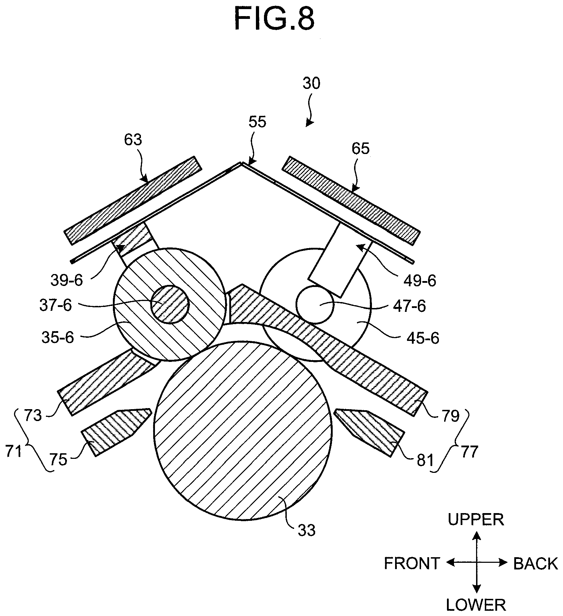

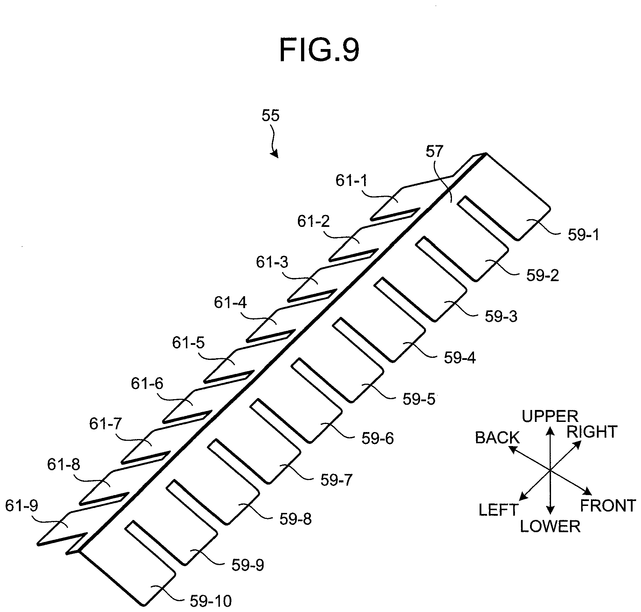

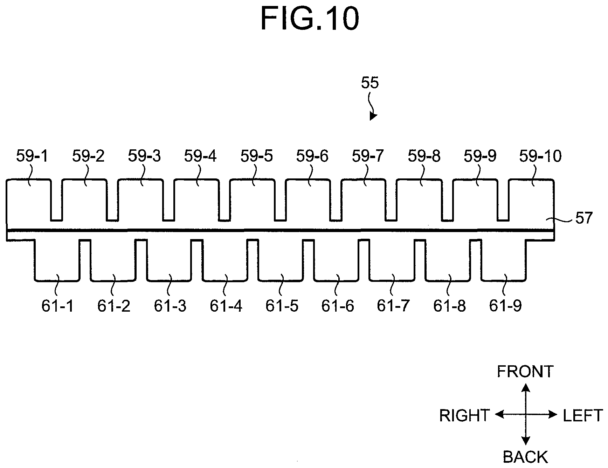

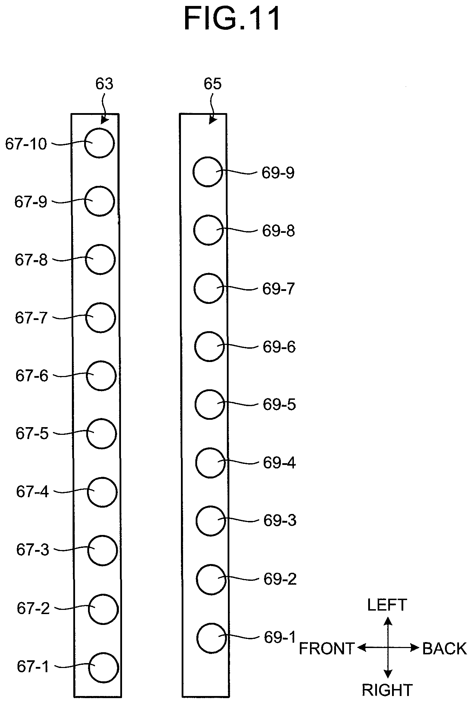

FIGS. 3 to 8 are diagrams illustrating an example of the thickness detection device according to the first embodiment. FIG. 3 is a perspective view of the thickness detection device according to the first embodiment as viewed from a back upper right side thereof. FIG. 4 is a diagram of the thickness detection device according to the first embodiment as viewed from a back side thereof. FIG. 5 is a diagram of the thickness detection device according to the first embodiment as viewed from a right side thereof. FIG. 6 is a diagram of the thickness detection device according to the first embodiment as viewed from a front lower right side thereof. FIG. 7 is a sectional arrow view along a line A-A illustrated in FIG. 4. FIG. 8 is a sectional arrow view along a line B-B illustrated in FIG. 4. FIG. 9 is a diagram illustrating a leaf spring as viewed from a front upper left side thereof. FIG. 10 is a diagram illustrating the leaf spring as viewed from an upper side thereof. FIG. 11 is a diagram illustrating a sensor unit as viewed from an upper side thereof.

As illustrated in FIGS. 3 to 8, the thickness detection device 30 includes a roller 33. The roller 33 has a cylindrical shape, and is configured so as to be able to rotate around a center of a shaft 31. That is, the center (the center of mass) of the roller 33 matches the center (the center of mass) of the shaft 31. The shaft 31 is supported by a support unit (not illustrated) of the paper-sheet handling device 10. Accordingly, movements of the roller 33 in front-back, right-left, and upper-lower directions are suppressed. That is, the roller 33 is a fixed roller. A rotary drive force is transmitted to the shaft 31, and the shaft 31 is rotated by the rotary drive force. The roller 33 rotates along with the rotation of the shaft 31. That is, the roller 33 functions as a carrier roller. The roller 33 can rotate forward or backward according to the direction of the rotary drive force.

The thickness detection device 30 also includes rollers 35-1 to 35-10 (hereinafter, also "a plurality of movable rollers of a first group"). In the following descriptions, unless otherwise particularly distinguished, the rollers 35-1 to 35-10 may be collectively referred to as "roller 35". The rollers 35-1 to 35-10 are provided with a predetermined interval therebetween in the direction of the shaft 31 of the roller 33. The respective rollers 35 are configured so as to be able to rotate around corresponding shafts 37. The respective rollers 35 are arranged near the roller 33, across a paper-sheet carrier path on the front side of the roller 33. In this case, the respective rollers 35 are arranged so that the shafts 37 are located in parallel to the shaft 31. The respective rollers 35 can move along roller-shaft support units (not illustrated) of a guide member 73 described later. The rollers 35 are respectively supported by support units 39 to transmit displacements to a leaf spring 55.

Each of the support units 39 includes a support unit body 41, and a pair of support columns 43 which rise from a left end and a right end of the support unit body 41. Both ends of the shaft 37 described above are rotatably supported by the pair of support columns 43. The support unit body 41 is in contact with the leaf spring 55.

The thickness detection device 30 also includes rollers 45-1 to 45-9 (hereinafter, also "a plurality of movable rollers of a second group"). In the following descriptions, unless otherwise particularly distinguished, the rollers 45-1 to 45-9 may be collectively referred to as "roller 45". The rollers 45-1 to 45-9 are provided with a predetermined interval therebetween so as to be in a "staggered manner" with respect to the first group of the movable rollers in the direction of the shaft 31 of the roller 33. The respective rollers 45 are configured to be rotatable around corresponding shafts 47. The respective rollers 45 are arranged near the roller 33, across the paper-sheet carrier path therebetween on the back side of the roller 33. In this case, the respective rollers 45 are arranged so that the shafts 47 are located in parallel to the shaft 31. The respective rollers 45 can move along roller support units (not illustrated) of a guide member 79 described later. The rollers 45 are respectively supported by support units 49 to transmit displacements to the leaf spring 55. As illustrated in FIG. 5, an angle θ formed between a line segment connecting the center of the shaft 37 of the roller 35 and the center of the shaft 31 of the roller 33 and a line segment connecting the center of the shaft 47 of the roller 45 and the center of the shaft 31 of the roller 33 is, for example, 40 degrees.

Each of the support units 49 includes a support unit body 51, and a pair of support columns 53 which rise from a left end and a right end of the support unit body 51. Both ends of the shaft 47 described above are rotatably supported by the pair of support columns 53. The support unit body 51 is in contact with the leaf spring 55.

As illustrated in FIGS. 9 and 10, the leaf spring 55 includes a plate-like leaf spring body 57 which bent substantially at the center in the front-back direction, plate-like members 59-1 to 59-10, and plate-like members 61-1 to 61-9 which are arranged in a "staggered manner" with respect to the plate-like members 59-1 to 59-10. Each of the plate-like members 59-1 to 59-10 extends from a front end of the leaf-spring body 57 in the forward direction on the same plane with the leaf-spring body 57. Each of the plate-like members 61-1 to 61-9 extends from a back end of the leaf-spring body 57 in the backward direction on the same plane with the leaf-spring body 57.

As illustrated in FIGS. 3 to 8, the support units 39-1 to 39-10 that support the rollers 35-1 to 35-10, are in contact with the plate-like members 59-1 to 59-10, respectively. Accordingly, when a paper sheet passes through the paper-sheet carrier path between the roller 33 and the rollers 35-1 to 35-10, the rollers 35-1 to 35-10 can move by a distance corresponding to the thickness of the paper sheet, on a line connecting the center of the shaft 31 and the center of each of the shafts 37, in a direction away from the roller 33. The support units 49-1 to 49-9 that support the rollers 45-1 to 45-9, are in contact with the plate-like members 61-1 to 61-9, respectively. Accordingly, when a paper sheet passes through the paper-sheet carrier path between the roller 33 and the rollers 45-1 to 45-9, the rollers 45-1 to 45-9 can move by the distance corresponding to the thickness of the paper sheet, on a line connecting the center of the shaft 31 and the center of the shaft 47, in a direction away from the roller 33.

A sheet-like sensor unit 63 is provided to face upper surfaces of the plate-like members 59-1 to 59-10 (that is, surfaces of the plate-like member 59 opposite to surfaces on which the support units 39 are fixed). A sheet-like sensor unit 65 is also provided to face upper surfaces of the plate-like members 61-1 to 61-9 (that is, surfaces of the plate-like members 61 opposite to surfaces on which the support units 49 are fixed).

As illustrated in FIG. 11, the sensor unit 63 includes sensors 67-1 to 67-10. The sensors 67-1 to 67-10 are arranged in a dispersed manner on the sheet-like sensor unit 63 with a predetermined interval therebetween. The sensors 67 can be a thickness sensor according to an eddy-current method, or can be a thickness sensor including a piezoelectric element. As illustrated in FIG. 11, the sensor unit 65 includes sensors 69-1 to 69-9. The sensors 69-1 to 69-9 are arranged in a dispersed manner on the sheet-like sensor unit 65 with a predetermined interval therebetween. The respective sensors 69 can be a thickness sensor according to the eddy-current method, or can be a thickness sensor including a piezoelectric element.

The sensors 67-1 to 67-10 correspond to the respective rollers 35-1 to 35-10, and are provided with an interval same as the arrangement interval of the rollers 35-1 to 35-10. That is, the sensors 67-1 to 67-10 are arranged so as to face the upper surfaces of the plate-like members 59-1 to 59-10, and can detect respective displacements of the rollers 35-1 to 35-10, that is, the thickness of the paper sheet passing through the paper-sheet carrier path between the roller 33 and the rollers 35-1 to 35-10. Sensor values obtained by the respective sensors 67 are output to a control unit (not illustrated). The control unit (not illustrated) calculates the thickness of respective parts of the paper sheet passing through the paper-sheet carrier path, based on the obtained sensor values. The control unit (not illustrated) can determine the normal or abnormal state of the passing paper sheet by comparing the calculated thickness with a thickness reference value of the banknote.

The sensors 69-1 to 69-9 correspond to the respective rollers 45-1 to 45-9, and are provided with an interval same as the arrangement interval of the rollers 45-1 to 45-9. That is, the sensors 69-1 to 69-9 are arranged so as to face the upper surfaces of the plate-like members 61-1 to 61-9, and can detect respective displacements of the rollers 45-1 to 45-9, that is, the thickness of the paper sheet passing through the paper-sheet carrier path between the roller 33 and the rollers 45-1 to 45-9. Sensor values obtained by the respective sensors 69 are output to the control unit (not illustrated) described above. The control unit (not illustrated) calculates the thickness of respective parts of the paper sheet passing through the paper-sheet carrier path, based on the obtained sensor values. The control unit (not illustrated) can determine the normal or abnormal state of the passing paper sheet by comparing the calculated thickness with the thickness reference value of the banknote.

The roller 33, the rollers 35-1 to 35-10, the plate-like members 59-1 to 59-10, and the sensors 67-1 to 67-10 of the sensor unit 63 are included in the "first thickness detection unit" located on the front side of the roller 33. Further, the roller 33, the rollers 45-1 to 45-9, the plate-like members 61-1 to 61-9, and the sensors 69-1 to 69-9 of the sensor unit 65 are included in the "second thickness detection unit" located on the back side of the roller 33. That is, because the roller 33 is commonly used between the "first thickness detection unit" and the "second thickness detection unit", a space in which the first thickness detection unit and the second thickness detection unit are arranged, can be narrowed down. That is, space saving of the thickness detection device 30, can be realized.

The thickness detection device 30 includes a guide unit 71 that guides the paper sheets to be carried to between the roller 33 and the rollers 35-1 to 35-10. The guide unit 71 includes the plate-like guide member 73 arranged on an upper side of the carrier path, and a plate-like guide member 75 arranged on a lower side of the carrier path. The guide member 71 guides paper sheets so that the paper sheets carried from the front side to the back side of the thickness detection device 30, move in between the roller 33 and the rollers 35-1 to 35-10, in a direction substantially orthogonal to a surface including the shaft 31 and the shaft 37 and substantially parallel to the shaft 31 and the shaft 37.

The thickness detection device 30 includes a guide unit 77 that guides the paper sheet to be carried to between the roller 33 and the rollers 45-1 to 45-9. The guide unit 77 includes the plate-like guide member 79 arranged on an upper side of the carrier path, and a plate-like guide member 81 arranged on a lower side of the carrier path. The guide member 77 guides paper sheets so that the paper sheets to be carried from the back side to the front side of the thickness detection device 30, move in between the roller 33 and the rollers 45-1 to 45-9, in a direction substantially orthogonal to a surface including the shaft 31 and the shaft 47 and substantially parallel to the shaft 31 and the shaft 47. The guide member 73 and the guide member 79 are integrally formed.

### [Operation example of thickness detection device]

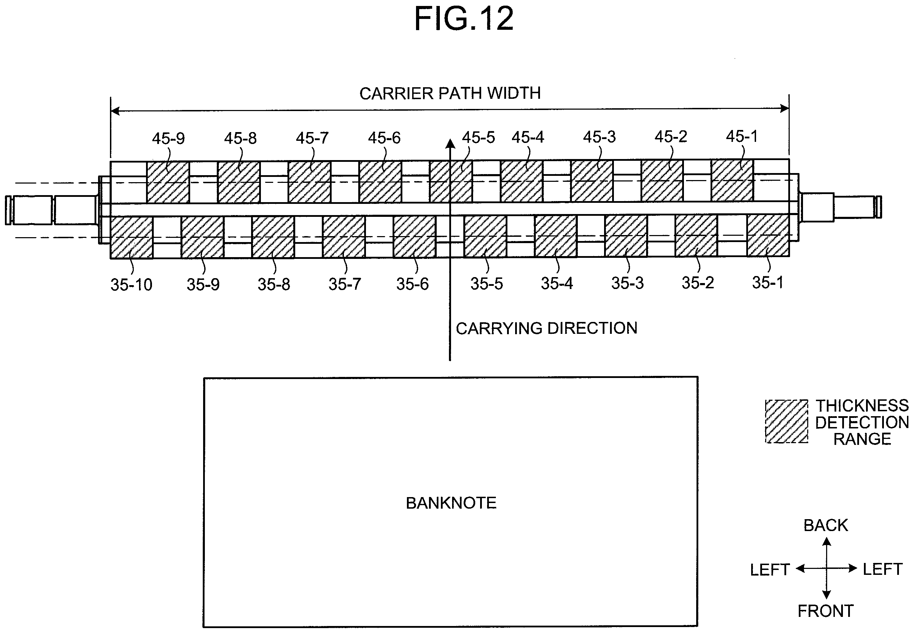

An example of a processing operation of the thickness detection device 30 that has the above configuration is described. FIG. 12 is a diagram for explaining the processing operation of the thickness detection device according to the first embodiment.

As illustrated in FIG. 12, a banknote carried from the front side to the back side of the thickness detection device 30, first moves in the "first thickness detection unit", that is, between the roller 33 and the rollers 35-1 to 35-10. At this time, sensor values corresponding to the thickness of the banknote, are detected by the sensors 67-1 to 67-10, in ten thickness detection ranges respectively corresponding to the rollers 35-1 to 35-10 (the hatched areas in FIG. 12). The sensor values obtained by the respective sensors 67, are output to the control unit (not illustrated) described above.

Subsequently, the banknote moves in the "second thickness detection unit", that is, between the roller 33 and the rollers 45-1 to 45-9 due to the rotation of the roller 33. At this time, sensor values corresponding to the thickness of the banknote, are detected by the sensors 69-1 to 69-9, in nine thickness detection ranges respectively corresponding to the rollers 45-1 to 45-9 (the hatched areas in FIG. 12). The thickness detection ranges of the "second thickness detection unit" are arranged so as to be in a "staggered manner" with respect to the thickness detection ranges of the "first thickness detection unit". The sensor values obtained by the respective sensors 69, are output to the control unit (not illustrated) described above.

The control unit (not illustrated) calculates the thicknesses of respective parts of the paper sheet passing through the paper-sheet carrier path, based on the sensor values obtained from the sensors 67 and the sensors 69. The control unit (not illustrated) can determine the normal or abnormal state of the passing paper sheet by comparing the calculated thicknesses with the thickness reference value of the banknote.

As described above, according to the present embodiment, the thickness detection device 30 includes the roller 33, the rollers 35-1 to 35-10 that are the movable rollers of the first group, the rollers 45-1 to 45-9 that are the movable rollers of the second group, the sensors 67-1 to 67-10 that are the sensors of the first group, and the sensors 69-1 to 69-9 that are the sensors of the second group. The roller 33 is the cylindrical fixed roller being rotatable around the shaft 31. The rollers 35-1 to 35-10 are provided with an interval therebetween in an axial direction of the roller 33, and the respective rollers 35 are arranged near the roller 33 on an upstream side in the carrying direction of the paper sheets. The rollers 45-1 to 45-9 are provided with an interval therebetween so as to be in a "staggered manner" with respect to the rollers 35-1 to 35-10 in the axial direction of the roller 33, and the respective rollers 45 are arranged near the roller 33 on a downstream side in the carrying direction. The sensors 67-1 to 67-10 correspond to the rollers 35-1 to 35-10 and detect the displacements of the rollers 35-1 to 35-10 in the direction orthogonal to the shaft 37, respectively. The sensors 69-1 to 69-9 correspond to the rollers 45-1 to 45-9 and detect the displacements of the rollers 45-1 to 45-9 in the direction orthogonal to the shaft 47, respectively.

According to the thickness detection device 30, the roller 33 can be commonly used between the "first thickness detection unit" including the roller 33, the rollers 35-1 to 35-10 and the sensors 67-1 to 67-10, and the "second thickness detection unit" including the roller 33, the rollers 45-1 to 45-9 and the sensors 69-1 to 69-9. Accordingly, the space in which the first thickness detection unit and the second thickness detection unit, are arranged can be narrowed down. That is, space saving of the thickness detection device 30, can be realized.

The thickness detection device 30 includes the guide unit 71 that guides the paper sheets to be carried to between the roller 33 and the rollers 35-1 to 35-10.

According to the configuration of the thickness detection device 30, because the paper sheets to be carried, can move in the thickness detection device 30 smoothly, the occurrence probability of jamming can be decreased.

### [Second embodiment]

A second embodiment relates to a "correction process of a sensor value" for removing noise included in a sensor value, which is caused by a deviation of the center (the center of mass) of the shaft 31 from the center (the center of mass) of the roller 33, that is, due to eccentricity of the roller 33, from the sensor value. The basic configuration of a paper-sheet handling device according to the second embodiment is common to that of the paper-sheet handling device 10 according to the first embodiment.

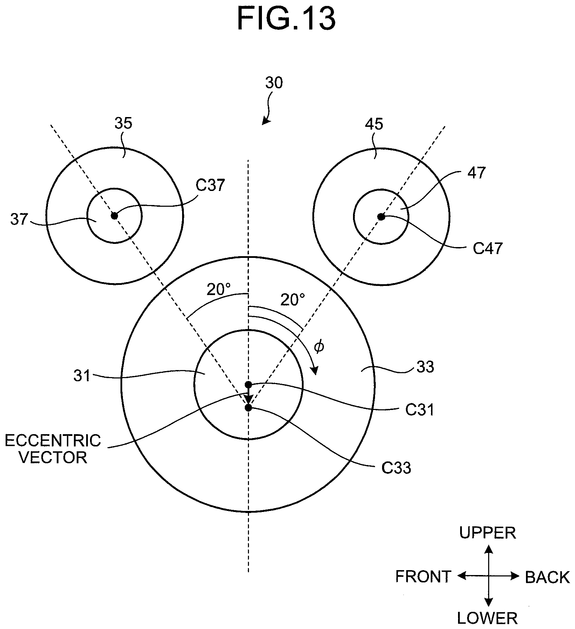

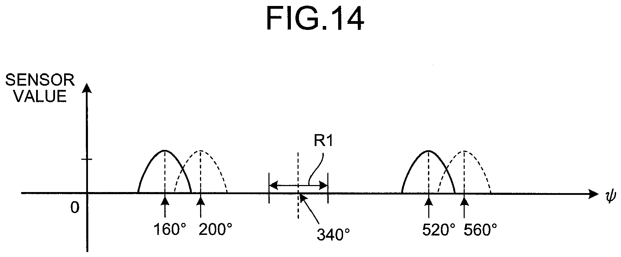

FIG. 13 and FIG. 14 are diagrams for explaining the correction process of a sensor value according to the second embodiment.

As illustrated in FIG. 13, the center C33 of the roller 33 and the center C31 of the shaft 31, are deviated from each other. A vector from the center C31 to the center C33 is referred to as "eccentric vector" herein. If the roller 33 is rotated around the center C31 of the shaft 31 in a state where paper sheets do not move in the thickness detection device 30, the "first thickness detection unit" and the "second thickness detection unit" obtain sensor values as illustrated in FIG. 14 according to an angle φ. In FIG. 14, the solid line indicates a sensor value of the "first thickness detection unit" and the dotted line indicates a sensor value of the "second thickness detection unit". In FIG. 14, a peak appears near 160°+360° xn in variations of the sensor value of the "first thickness detection unit". Meanwhile, a peak appears near 200°+360° xn in variations of the sensor value of the "second thickness detection unit". The sensor value variation of the "first thickness detection unit" (hereinafter, also "first sensor value variation") in the state where the paper sheets do not move in the thickness detection device 30, corresponds to the noise included in the sensor value of the "first thickness detection unit". Further, the sensor value variation of the "second thickness detection unit" (hereinafter, also "second sensor value variation") in the state where the paper sheets do not move in the thickness detection device 30, corresponds to the noise included in the sensor value of the "second thickness detection unit".

Therefore, in the second embodiment, a control unit (not illustrated) stores therein beforehand a pattern of the "first sensor value variation" and a pattern of the "second sensor value variation". The control unit (not illustrated) subtracts the pattern of the "first sensor value variation" from variations of actually measured sensor values received from the respective sensors 67 to correct the sensor value. The control unit (not illustrated) then calculates the thickness of each part of the paper sheet passing through the paper-sheet carrier path, based on the corrected sensor value. Similarly, the control unit (not illustrated) subtracts the pattern of the "second sensor value variation" from variations of actually measured sensor values received from the respective sensors 69 to correct the sensor value. The control unit (not illustrated) then calculates the thickness of each part of the paper sheet passing through the paper-sheet carrier path, based on the corrected sensor value.

In a range R1 including 340°, which is the middle of 160° and 520°, that is, a predetermined period including a timing at which the eccentric vector is directed opposite to the direction from the center C31 to the center C37, a separation distance between a side surface of the roller 33 and a side surface of the roller 35, becomes larger than that at the timing other than the predetermined period. That is, in the predetermined period, if the paper sheet is caused to move in between the roller 33 and the roller 35, the occurrence probability of jamming can be decreased. Therefore, the control unit (not illustrated) can execute control to cause the paper sheet to move in between the roller 33 and the roller 35, in the predetermined period including the timing at which the eccentric vector is directed opposite to the direction from the center C31 to the center C37. Further, when the paper sheet moves in from the side of the roller 47, that is, from the back side of the thickness detection device 30, the control unit (not illustrated) can execute control to cause the paper sheet to move in between the roller 33 and the roller 45, in the predetermined period including the timing at which the eccentric vector is directed opposite to the direction from the center C31 to the center C47.

As described above, according to the present embodiment, in the thickness detection device 30, the control unit (not illustrated) corrects the actually measured sensor values, based on a variation pattern of the sensor value in a state where the paper sheet does not move in the thickness detection device 30.

According to the configuration of the thickness detection device 30, even if the roller 33 is eccentric, the thickness detection accuracy can be improved.

Furthermore, the control unit (not illustrated) causes the paper sheet to move in between the roller 33 and the roller 35, in a predetermined period including the timing at which the eccentric vector is directed opposite to the direction from the center C31 to the center C37.

With the configuration of the thickness detection device 30, the occurrence probability of jamming can be further decreased.

### Explanation of Reference

10 paper-sheet handling device
11 insert/discharge port
13 insert-banknote temporary holding unit
15 banknote feeding unit
17 verifying unit
19 discharge-banknote temporary holding unit
21 non-reusable-banknote storing unit
23 storing cassette
30 thickness detection device
31, 37, 47 shaft
33, 35, 45 roller
39, 49 support unit
41, 51 support unit body
43, 53 support column
55 leaf spring
57 leaf spring body
59, 61 plate-like member
63, 65 sensor unit
67, 69 sensor
71, 77 guide unit
73, 75, 79, 81 guide member

## Claims

1. A thickness detection device comprising:
a cylindrical fixed roller being rotatable around a shaft;
a plurality of movable rollers of a first group, which are provided with an interval therebetween in an axial direction of the fixed roller, with the respective movable rollers being arranged near the fixed roller on an upstream side in a carrying direction of paper sheets;
a plurality of movable rollers of a second group, which are provided with an interval therebetween so as to be in a staggered manner with respect to the movable rollers of the first group in the axial direction of the fixed roller, with the respective movable rollers being arranged near the fixed roller on a downstream side in the carrying direction;
a plurality of sensors of a first group that respectively correspond to each of the movable rollers of the first group to detect displacements of the movable rollers of the first group in a direction orthogonal to the shaft respectively; and
a plurality of sensors of a second group that respectively correspond to each of the movable rollers of the second group to detect displacements of the movable rollers of the second group in a direction orthogonal to the shaft respectively.

2. The thickness detection device according to claim 1, further comprising a guide unit that guides paper sheets to be carried to between the fixed roller and the movable rollers of the first group.

3. The thickness detection device according to claim 1 or 2, further comprising a leaf spring that transmits displacements of the movable rollers of the first group respectively to the respective sensors of the first group, and that transmits displacements of the movable rollers of the second group respectively to the respective sensors of the second group, wherein
the leaf spring includes a body portion, a plurality of plate-like members of a first group that are integrally formed with the body portion and that are respectively arranged between the movable rollers of the first group and the sensors of the first group, and a plurality of plate-like members of a second group that are integrally formed with the body portion and that are respectively arranged between the movable rollers of the second group and the sensors of the second group.
